# EUROPEAN PATENT APPLICATION

(11) **EP 1 372 130 A1**
(43) Date of publication of application: **17.12.2003**
(21) Application number: 01912510.3
(22) Date of filing: 19.03.2001
(51) Int. Cl.: G09G 1/00, H04N 5/14, H04N 5/57

(54) **VIDEO SIGNAL CIRCUIT CONTROL METHOD, DISPLAY APPARATUS, AND COMPUTER**

(71) Applicant: FUJITSU LIMITED, Kawasaki-shi, Kanagawa 211-8588 (JP)
(72) Inventor: KANEYASU, Isamu, c/o FUJITSU PERIPHERALS LIMITED, Kato-gun, Hyogo 673-1447 (JP)
(74) Representative: Kreutzer, Ulrich, Dipl.-Phys.
(86) International application number: JP0102192
(87) International publication number: WO02075707

(57) **Abstract**

An object is to display both still images and moving images in good condition. A preamplifier circuit (311) for amplifying a supplied video signal S1 and adding a bias voltage Vba to the same, an output circuit (312) for amplifying power of the signal supplied from the preamplifier circuit (311) and inverting the same, and a variable bias circuit (314) for changing a level of the bias voltage Vba added in the preamplifier circuit (311) are provided. The preamplifier circuit (311) changes its gain Ga in accordance with the change of the bias voltage Vba by the variable bias circuit (314).

## Description

### TECHNICAL FIELD

The present invention relates to a method for controlling a video signal circuit, a video signal circuit, a display device, a computer, a computer program and a recording medium. Particularly, the present invention is applied to a CRT display device for a personal computer and is used for displaying moving images with high contrast.

### BACKGROUND ART

In general, a personal computer comprises a computer body, a display device, a printer, an input device and others. Contents that are processed by the personal computer are displayed by the display device as images (or pictures) in many cases.

Conventionally, the image that is displayed by the display device is usually a still image including characters mainly. However, in these years, a personal computer can be used for reproducing a digital video disk (DVD) or for editing video pictures. Thus, opportunities that a display device of a personal computer displays moving images have been increasing.

When the display device displays a still image, sharpness of the image is an important factor. On the other hand, when the display device displays a moving image, contrast or brightness of the image is an important factor.

In the conventional display device, a video signal circuit is designed to maintain good frequency characteristics since sharpness and focusing of images are important. As a result, a dynamic range of contrast can be made a sacrifice a little so that high contrast of the image is hardly obtained.

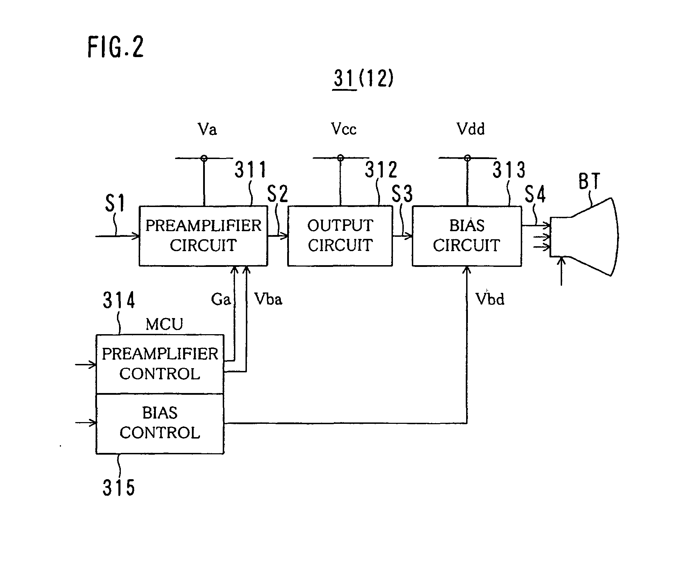

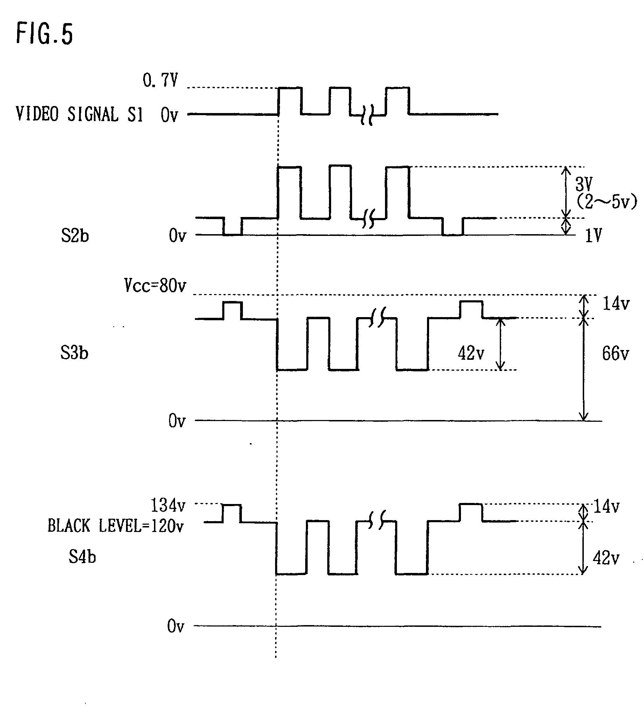

Next, the conventional video signal circuit will be explained with reference to Fig. 2 that shows a video signal circuit 31 according to an embodiment of the present invention and Fig. 5 that shows an example of waveforms of the conventional video signals. If it is necessary to distinguish the conventional example from the embodiment of the present invention, ends of reference letters of conventional elements are provided with a suffix "j".

The video signal circuit 31j includes a preamplifier circuit 311j, an output circuit 312j, a bias circuit 313j, a cathode ray tube BT and others as shown in Fig. 2.

The video signal S1 is one of R (Red), G (Green) and B (Blue) video signals. As shown in Fig. 5, the video signal S1 is a pulse signal train including pulses corresponding to pixels. In the case of 1024 x 800 dot screen, for example, 1024 pulses appear in a period of a horizontal synchronizing signal. Each pulse has a peak value corresponding to an intensity level of the color. Namely, it has a value between 0-0.7 volts corresponding to a density level of the color. The value of 0 volt corresponds to the minimum intensity, and the value of 0.7 volts corresponds to the maximum intensity. If all of the R, G and B video signals S1 are 0 volt, the color is black. If all of the R, G and B video signals S1 are 0.7 volts, the color is white.

The preamplifier circuit 311j amplifies a supplied video signal S1 by an appropriate gain and adds a constant value of bias voltage Vbaj to the same. Namely, in accordance with the gain, the video signal S1 whose maximum value is 0.7 volts is amplified to a signal whose maximum value is 2-5 volts. The gain is determined and fixed in accordance with a gain and characteristics of the output circuit 312 and characteristics of the cathode ray tube BT and others. In accordance with the fixed gain, a signal whose maximum value is 3 volts is obtained, for example. Then, one volt of bias voltage Vbaj is added to the video signal. The reason for adding the bias voltage Vbaj is to make the signal rise quickly and to maintain the frequency characteristics in the subsequent output circuit 312j. As a result, the preamplifier circuit 311j delivers a signal S2b.

The output circuit 312j amplifies power of the signal S2b delivered from the preamplifier circuit 311j by a constant gain and inverts the same. The output circuit 312j is supplied with the power source voltage Vcc of approximately 80 volts. For example, supposing that the gain of the output circuit 312j is "14", one volt of the bias voltage Vbaj corresponds to 14 volts, and the maximum value 3 volts of the video signal becomes 42 volts. As a result, the output circuit 312j delivers a signal S3b.

Concerning the signal S3b, a theoretical maximum value of the amplitude of the video signal is 66 volts, so a theoretical dynamic range is 0-66 volts. Actually, however, the dynamic range is controlled within the range of 0-42 volts for securing approximately 24 volts as the adjustment range of the intensity, for example.

The bias circuit 313j corrects a variation in spot cutoff voltage of an electron gun of a cathode ray tube BT. Namely, it makes black levels uniform of the signal S3b delivered from the output circuit 312j. For example, a direct current component of the signal S3b is cut off, and a predetermined bias voltage Vbd is added. Thus, the black level of the video signal is set to a value in the vicinity of 120 volts in accordance with the cathode ray tube BT. As a result, the bias circuit 313 outputs a signal S4b. The signal S4b is applied to a cathode of the cathode ray tube BT.

A user can adjust intensity and contrast when using the display device 12j. When the intensity is adjusted, a potential level for the black level of the signal S4b is altered up and down. When the contrast is adjusted, the maximum value of the amplitude of the video signal is altered within a range of 0-42 volts.

In order to enhance the dynamic range of the contrast, a range of the amplitude of the video signal that is applied to the cathode of the cathode ray tube BT may be enhanced. For this purpose, the maximum value of the amplitude of the signal may be increased, but the maximum value of the amplitude of the signal is fixed to 42 volts in the conventional device. It is sufficient for displaying a still image. Since the frequency characteristics are good, a sharp image can be displayed.

However, when displaying a moving image, contrast of the image is not sufficient as explained above. Accordingly, the entire image becomes too dark for viewers to enjoy the moving image fully.

### DISCLOSURE OF THE INVENTION

An object of the present invention is to display both still images and moving images in good condition by selecting sharpness or high contrast to give higher priority than the other in accordance with the image to be displayed on a screen of a display device.

According to one embodiment of the present invention, a method for controlling a video signal circuit is provided. The video signal circuit includes a preamplifier circuit for amplifying a video signal and adding a bias voltage to the same and an output circuit for amplifying power of the signal that is delivered from the preamplifier circuit. In the method, a level of the bias voltage that is applied by the preamplifier circuit is changed in accordance with contents of the video signal.

Preferably, the level of the bias voltage is changed in accordance with the video signal that is either a still image video signal or a moving image video signal.

According to another embodiment of the present invention, a video signal circuit is provided that comprises a preamplifier circuit for amplifying a supplied video signal and adding a bias voltage to the same, an output circuit for amplifying power of the signal that is delivered from the preamplifier circuit, and a variable bias circuit for changing a level of the bias voltage that is added in the preamplifier circuit.

### BRIEF DESCRIPTION OF THE DRAWINGS

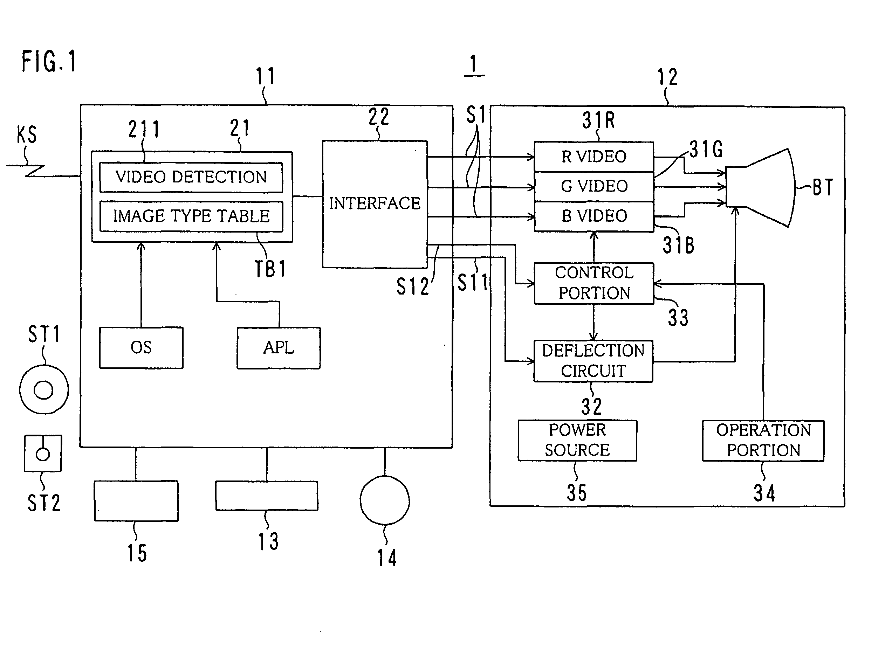

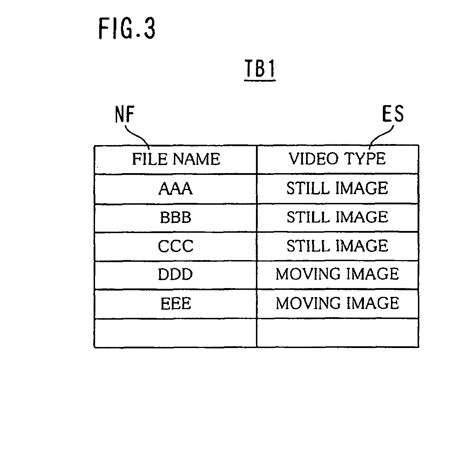

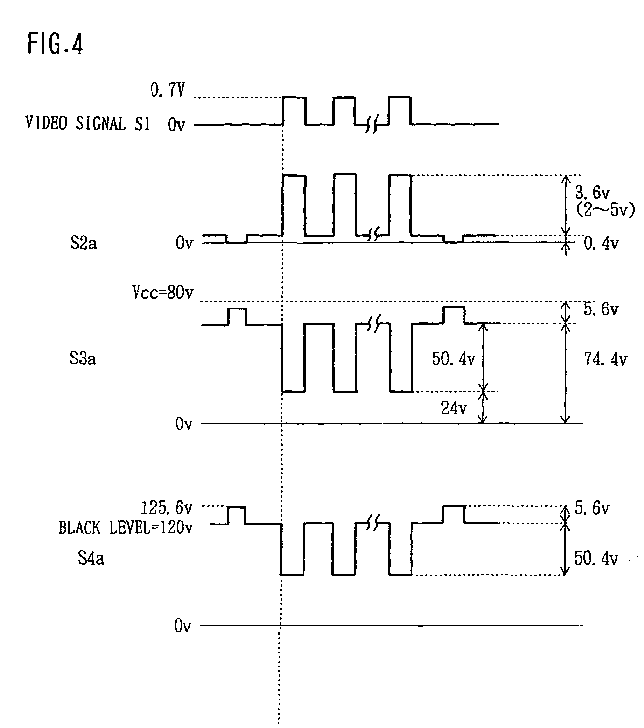

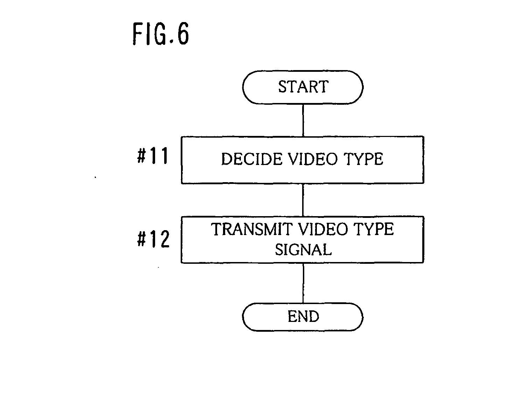

Fig. 1 is a block diagram of a computer system according to an embodiment of the present invention. Fig. 2 is a circuit diagram showing an example of a video signal circuit of a display device. Fig. 3 is a diagram showing an example of an image type table. Fig. 4 is a diagram showing waveforms of signals in a moving image mode. Fig. 5 is a diagram showing waveforms of signals in a still image mode. Fig. 6 is a flowchart showing a process performed by a video control portion of a computer.

### BEST MODE FOR CARRYING OUT THE INVENTION

In Fig. 1, a computer system 1 includes a computer 11, a display device 12, a keyboard 13, a mouse 14, a media drive device 15 and others.

A hardware structure of the computer 11 is known well, which includes a CPU, a RAM, a communication control device and a magnetic disk drive. The magnetic disk drive stores an operating system OS, application programs APL necessary for realizing various functions and data. These programs or data are loaded on the RAM for the CPU to execute operating processes.

When the operating system OS or the application program APL is executed, signals for displaying necessary images on the display device 12 are generated. The signals include a video signal, synchronizing signals and others.

The keyboard 13 and the mouse 14 are used for a user to enter instruction and data. The media drive device 15 accesses various types of recording mediums ST1 and ST2 such as a CD-ROM, a flexible disk or a magneto-optic disk so as to read and write data or programs.

A computer program of the present invention is stored in the various recording mediums ST1 and ST2 explained above and can be supplied with the recording mediums ST1 and ST2. Alternatively, the computer program can be downloaded via a communication line KS from other server. The program can be supplied so as to work on various operating systems and platforms and under various system environments or network environments.

As shown in Fig. 1, the computer 11 is provided with a video control portion 21 and a display interface 22. The video control portion 21 is provided with a video detection portion 211 and an image type table TB1.

The video detection portion 211 generates a video type signal S12 for discriminating an image to be displayed by the display device 12, which is a still image or a moving image.

The image type table TB1 stores video type information that indicates a reference between file names NF of programs and video types ES as shown in Fig. 3. The video type information is preset by a manufacturer or a user. For example, if a program displays still images mainly as a word processor, a spreadsheet program or a business management program, "still image" is set as the video type ES. If a program displays moving images mainly as a DVD reproduction program or a moving image reproduction program, "moving image" is set as the video type ES.

The video detection portion 211 refers to the image type table TB1. If the video type information of the program delivering the video signal is the "still image", the video detection portion 211 generates the video type signal S12 indicating the "still image", while if the video type information of the program is the "moving image", the video detection portion 211 generates the video type signal S12 indicating the "moving image".

If the program is not recorded in the image type table TB1, a video type thereof is decided in accordance with an extension of the file name. If the program or data is restored from a recording medium such as a CD-ROM, the video type can be decided in accordance with a type and contents of the recording medium.

Alternatively, the video type signal S12 can be generated in accordance with an instruction that was entered by the keyboard 13 or the mouse 14. In this case, a window for designating a video type may be displayed on a screen of the display device 12 so that the user can enter an instruction corresponding thereto, for example.

The R, G and B video signals S1, the horizontal and vertical synchronizing signals S11, and the video type signal S12 are supplied to the display device 12 via the display interface 22. For communication of these signals, a special signal line or a DDC communication line is used. The DDC communication line is based on a standardized 15-pin interface for display devices. The DDC communication line enables communication not only of the video type signal S12 but also of other various control signals or data.

Next, the display device 12 includes R, G and B video signal circuits 31R, 31G and 31B, a deflection circuit 32, a control portion 33, an operation portion 34, a power source portion 35, a cathode ray tube BT and others.

Since the video signal circuits 31R, 31G, and 31B have similar structures to each other, one of them will be explained. When referring to as a "video signal circuit 31", it means one of them or all of them as a whole.

The R, G and B video signals S1 delivered from the computer 11 are supplied to the cathode of the cathode ray tube BT via the video signal circuits 31R, 31G and 31B.

The synchronizing signal S11 is supplied to the deflection circuit 32. The deflection circuit 32 deflects electron beams of the cathode ray tube BT in the horizontal direction and in the vertical direction. The deflection circuit 32 is a conventional one.

The video type signal S12 is supplied to the control portion 33. The control portion 33 switches the operation mode between the still image mode and the moving image mode in accordance with the video type signal S12 that indicates the "still image" or the "moving image". In accordance with the operation mode, frequency characteristics and a dynamic range of contrast in the video signal circuit 31 are controlled to be different values. In addition, responding to an operation of the operation portion 34 by the user, the still image mode and the moving image mode are switched.

As shown in Fig. 2, the video signal circuit 31 includes a preamplifier circuit 311, an output circuit 312, a bias circuit 313, a preamplifier control portion 314, a bias control portion 315, a cathode ray tube BT and others. Among these elements, some elements are explained as a background art, so the explanation thereof is omitted or briefed.

The preamplifier circuit 311 amplifies the video signal S1 by an appropriate gain Ga and adds the bias voltage Vba thereto. A level of the bias voltage Vba can be changed by the preamplifier control portion 314. In addition, a gain Ga of the preamplifier circuit 311 can be also changed by the preamplifier control portion 314.

For example, the bias voltage Vba is set to one volts, and the gain Ga is set to "4.3" in the still image mode. The bias voltage Vba is set to 0.4 volts, and the gain Ga is set to "5.1" in the moving image mode.

As a result, the preamplifier circuit 311 delivers two types of signals S2a and S2b having different ranges of the video signal and different bias voltages Vba as shown in Figs. 4 and 5.

Namely, the maximum value of the video signal is 3 volts in the still image mode as shown by the signal S2b in Fig. 5, while the maximum value of the video signal is 3.6 volts in the moving image mode as shown by the signal S2a in Fig. 4. In any case, the maximum value of the output voltage of the preamplifier circuit 311 is 4 volts.

The output circuit 312 amplifies power of the signal S2 delivered from the preamplifier circuit 311 by a constant gain and inverts the same. The output circuit 312 is provided with a power source voltage Vcc that is approximately 80 volts.

For example, it is supposed that the gain of the output circuit 312 is "14". Then, the bias voltage Vba that is one volt corresponds to 14 volts, and the maximum value 3 volts of the video signal corresponds to 42 volts in the still image mode as shown by the signal S3b in Fig. 5. The bias voltage Vba that is 0.4 volts corresponds to 5.6 volts, and the maximum value 3.6 volts of the video signal corresponds to 50.4 volts in the moving image mode as shown by the signal S3a in Fig. 4.

Namely, the dynamic range of contrast is 0-42 volts in the still image mode, while it is enhanced to 0-50.4 volts in the moving image mode. In other words, a margin of 7.6 volts is generated in the moving image mode. Therefore, an image with high contrast can be displayed in the moving image mode. Furthermore, 24 volts of adjustment range of the intensity is secured in any mode.

In addition, a theoretical dynamic range in the moving image mode can be enhanced to 0-74.4 volts.

The bias circuit 313 makes the black levels of the signal S3 uniform, the signal S3 being delivered from the output circuit 312. Namely, the black level of the video signal is set to a value in the vicinity of 120 volts. As a result, the bias circuit 313 delivers the signals S4a and S4b.

Namely, 134 volts of the bias voltage is applied in the still image mode as shown by the signal S4b in Fig. 5, while 125.6 volts of the bias voltage is applied in the moving image mode as shown by the signal S4a in Fig. 4. Such a bias voltage is supplied by the bias control portion 315 in accordance with the operation mode.

When using the display device 12, the user can adjust the intensity and the contrast. When the intensity is adjusted, the bias voltage Vbd is changed, and the potential of the black level in the signal S4 is changed. When performing the contrast adjustment in the case of the still image mode, the contrast adjustment can be performed in the range where the maximum value of the amplitude of the video signal is 0-42 volts. In the case of the moving image mode, the contrast adjustment can be performed in the range where the maximum value of the amplitude of the video signal is 0-50.4 volts.

Therefore, in the moving image mode, the entire image can be brightened with a black portion being maintained in black, for enjoying an image with high contrast.

However, since the bias voltage Vba is lowered to 0.4 volts in the moving image mode, frequency characteristics in the output circuit 312 are deteriorated a little, so that sharpness of an image is lowered. However, in the case where the image is a moving image, the user usually does not get close to the screen to stare the image as the case of a still image but sees a movement of the entire image at a distance from the screen. In this situation, even if focusing or clearness of vertical lines is less so that the image quality is a little deteriorated, there is no problem practically. In other words, for a moving image, the contrast and the brightness of the image are important, but the sharpness is not so important compared with the case of a still image.

In addition, a sharp image can be displayed in the still image mode in the same way as the conventional device.

Fig. 6 is a flowchart showing a process of the video control portion 21 in the computer 11.

As shown in Fig. 6, a video type of the video signal that is currently delivered is decided (#11). Then, the video type signal S12 is generated in accordance with the video type that is a still image or a moving image. The generated video type signal S12 is transmitted to the display device 12 (#12).

The process explained above is executed repeatedly at an appropriate timing or is executed every time when the application program to be executed is changed. The process is executed by the CPU according to the computer program. Alternatively, a structure is possible in which the process can be executed by a hardware circuit.

As explained above, according to this embodiment, both a still image and a moving image can be displayed in good condition, by selecting sharpness or high contrast of the image to give higher priority than the other in accordance with the image to be displayed.

The preamplifier circuit 311, the output circuit 312, the bias circuit 313 and others can be structured by using a transistor, a diode, a resistor, a capacitor, an integrated circuit element and others. The output circuit 312 can be a single-chip integrated circuit that is available in the market.

Therefore, a display with high contrast can be realized easily by using a general-purpose single-chip integrated circuit for the output circuit 312, resulting in an advantageous cost/performance.

In the embodiment explained above, the preamplifier control portion 314 and the bias control portion 315 are included in the video signal circuit 31 as an example. However, it is possible to include these in the control portion 33. It is possible to constitute the preamplifier control portion 314, the bias control portion 315 and the control portion 33 by an MCU circuit. In this case, the video type signal S12 may be supplied to an input port of the MCU circuit, and the operation mode may be switched by changing potential of the input port. Furthermore, it is possible to determine the gain Ga of the preamplifier circuit 311 so that intensity of a predetermined area on the screen becomes a predetermined value, for example.

In the embodiment explained above, a general-purpose integrated circuit element may be used as the output circuit 312 without any change so as to switch between the still image mode and the moving image mode. However, it is possible to change the gain of the output circuit 312 without or with changing the gain Ga of the preamplifier circuit 311.

In the embodiment explained above, the bias voltage Vba, the gain Ga and others in the still image mode or the moving image mode can be various values except for the values mentioned above. In this case, optimal values thereof may be determined by an experimental manner when the display device 12 is developed or designed. Three or more operation modes can be prepared instead of the two operation modes. For example, there can be a still image mode A, a still image mode B, a moving image mode A and a moving image mode B. The bias voltage Vba, the gain Ga and others may be changed continuously instead of switching between plural modes. In this case, a lever may be provided by hardware or software, and the user may operate the lever so as to determine the values thereof.

A structure of each portion or the entire of the computer 11, the display device 12 and the computer system 1, a circuit, a element to be used, a layout, a voltage value, contents and order of the process or other things can be modified within the scope of the present invention appropriately.

### INDUSTRIAL APPLICABILITY

As explained above, a video signal circuit and a display device according to the present invention can be applied to a CRT display device for a personal computer so as to display both still images and moving images with good condition. They are useful for an electronics industry and a communication industry.

## Claims

1. A method for controlling a video signal circuit including a preamplifier circuit for amplifying a video signal and adding a bias voltage to the same and an output circuit for amplifying power of the signal that is delivered from the preamplifier circuit, wherein
a level of the bias voltage that is applied by the preamplifier circuit is changed in accordance with contents of the video signal.

2. The method according to claim 1, wherein the level of the bias voltage is changed in accordance with the video signal that is either a video signal related to a still image or a video signal related to a moving image.

3. A video signal circuit comprising:
a preamplifier circuit for amplifying a supplied video signal and adding a bias voltage to the same;
an output circuit for amplifying power of the signal that is delivered from the preamplifier circuit; and
a variable bias circuit for changing a level of the bias voltage that is added in the preamplifier circuit.

4. The video signal circuit according to claim 3, wherein the output circuit amplifies power of the signal that is delivered from the preamplifier circuit and inverts the same.

5. The video signal circuit according to claim 3, wherein the preamplifier circuit has a variable gain that is changed within the maximum amplitude of the output signal in accordance with the change of the bias voltage by the variable bias circuit.

6. A display device for displaying images on a screen in accordance with a video signal, comprising:
a preamplifier circuit for amplifying a supplied video signal and adding a bias voltage to the same;
an output circuit for amplifying power of the signal that is delivered from the preamplifier circuit; and
a variable bias circuit for changing a level of the bias voltage that is added in the preamplifier circuit in accordance with an adjustment signal.

7. The display device according to claim 6, wherein the variable bias circuit increases the bias voltage if the video signal relates to a still image and decreases the bias voltage if the video signal relates to a moving image.

8. The display device according to claim 6, further comprising a reception circuit for receiving a video type signal for discriminating whether the video signal relates to a still image or to a moving image, wherein
the variable bias circuit uses the video type signal as the adjustment signal for changing the level of the bias voltage.

9. The display device according to claim 6, further comprising an operation portion for adjusting the level of the bias voltage, wherein
the variable bias circuit uses a signal from the operation portion as the adjustment signal for changing the level of the bias voltage.

10. A computer system comprising a computer body and a display device for displaying images on a screen in accordance with a video signal generated in the computer body, comprising:
a video signal circuit including
a preamplifier circuit for amplifying the video signal and adding a bias voltage to the same,
an output circuit for amplifying power of the signal that is delivered from the preamplifier circuit,
a reception circuit for receiving a video type signal related to contents of the video signal, and
a variable bias circuit for changing a level of the bias voltage that is added in the preamplifier circuit in accordance with the video type signal;
a video detection portion for generating the video type signal; and
a transmission portion for transmitting the generated video type signal to the reception circuit.

11. A computer that can display images on a screen of a display device in accordance with a generated video signal, comprising:
a video detection portion for generating a video type signal for discriminating the video signal that is either a video signal related to a still image or a video signal related to a moving image; and
a transmission portion for transmitting the generated video type signal to the display device.

12. The computer according to claim 11, further comprising a table indicating a relationship between a file name of a program for generating a video signal and the video type signal, wherein
the video detection portion refers to the table for generating the video type signal.

13. A computer program that is used for a computer that can display images on a screen of a display device in accordance with a generated video signal, the program makes the computer perform the steps of:
generating a video type signal for discriminating the video signal that is either a video signal related to a still image or a video signal related to a moving image; and
transmitting the generated video type signal to the display device.

14. A recording medium that can be read by a computer and stores the computer program according to claim 13.
